# EUROPEAN PATENT APPLICATION

(11) **EP 3 641 445 A1**
(43) Date of publication of application: **22.04.2020**
(21) Application number: 18817145.8
(22) Date of filing: 14.06.2018
(51) Int. Cl.: H04W 72/04

(54) **NETWORK DEVICE, USER DEVICE, AND WIRELESS COMMUNICATION METHOD**

(30) Priority: 16.06.2017 JP 2017119139
(71) Applicant: NTT DOCOMO, INC., Chiyoda-ku Tokyo 100-6150 (JP)
(72) Inventor: TAKAHASHI, Hideaki, Tokyo 100-6150 (JP); TAKEDA, Kazuki, Tokyo 100-6150 (JP); TAKEDA, Kazuaki, Tokyo 100-6150 (JP)
(74) Representative: Hoffmann Eitle
(86) International application number: PCT/JP2018/022741
(87) International publication number: WO 2018/230650

(57) **Abstract**

eNB (100A) includes a TTI determining unit (130) that determines, based on a least common multiple and a greatest common divisor of a plurality of TTIs, a unit time interval in a time direction that defines Maximum number of DL/UL-SCH transport block bits and Maximum number of bits of a DL/UL-SCH transport block both assignable to each of DL-SCH and UL-SCH used by a user device, and a channel setting unit (140) that sets the DL-SCH and the UL-SCH based on the TTIs determined by the TTI determining unit (130).

## Description

### TECHNICAL FIELD

The present invention relates to a network device and a user device that are included in a radio communication system in which a plurality of TTI lengths is prescribed, and a radio communication method implemented in the radio communication system.

### BACKGROUND ART

3rd Generation Partnership Project (3GPP) specifies Long Term Evolution (LTE), and with an aim of further speeding, specifies LTE-Advanced (hereinafter, it is assumed that the LTE includes the LTE-Advanced). Moreover, in the 3GPP, specifications of a successor system of the LTE called 5G New Radio (NR) and the like are being studied.

In such a study, for example, specifications relating to dual connectivity (DC) using a radio base station of an LTE system (eNB) and a radio base station of an NR system (gNB) are considered. In the DC, an MCG bearer that passes via a cell (radio base station) belonging to a master cell group (MCG), an SCG bearer that passes via a cell (radio base station) belonging to a secondary cell group (SCG), a split bearer diverting from a radio base station, and the like are prescribed.

Furthermore, in this study, it is considered to introduce Transmission Time Interval (TTI) that is shorter (Short TTI) than the conventional TTI of 1 ms (e.g., see Non-Patent Document 1). If the Short TTI is introduced, it is assumed that, in carrier aggregation (CA), a TTI length may vary from one component carrier (CC, hereinafter, "carrier") to another. Moreover, in the NR, it is assumed that a subcarrier spacing (numerology) may be different in the same carrier. If the values of the subcarrier spacing are different, the TTI lengths will also be different.

Similar is the case with the DC of the LTE and the NR. That is, the TTI (transmission time interval) may be different in the LTE and the NR.

### PRIOR ART DOCUMENT

### NON-PATENT DOCUMENT

Non-Patent Document 1: "Running CR to introduce shortened TTI and processing Lime for LTE", R2-1704733, 3GPP TSG-RAN WG2 #98, 3GPP, May 2017

### SUMMARY OF THE INVENTION

As mentioned earlier, if the TTI lengths are different in each carrier, or in the same carrier, how to prescribe a parameter of UE Category that is a setting parameter prescribed as a value per TTI for the user device (User Equipment, UE) becomes an issue.

Specifically, the maximum bit number assignable to DL-SCH (Shared Channel) and UL-SCH, which are transport shared channels, specifically, Maximum number of DL-SCH/UL-SCH transport block bits and Maximum number of bits of DL-SCH/UL-SCH transport block are prescribed as a value per TTI.

Therefore, when a plurality of TTI lengths including the Short TTI are prescribed, it is difficult to easily specify a parameter of the transport shared channel, specifically, the maximum bit number, assignable to the transport shared channel.

The present invention has been made in view of the above discussion. One object of the present invention is to provide a network device, a user device, and a radio communication method in which it is possible to easily set an appropriate parameter (maximum bit number) of the transport shared channel even when a plurality of TTI lengths including the Short TTI is used.

A network device according to one aspect of the present invention is a network device (e.g. , eNB 100A) included in a radio communication system (radio communication system 10) in which is used a plurality of transmission time intervals (TTI) having different time lengths (TTI length). The network device includes a transmission time interval determining unit (TTI determining unit 130) that determines, based on a least common multiple or a greatest common divisor of the plurality of transmission time intervals, a unit time interval in a time direction that defines a maximum bit number (Maximum number of DL/UL-SCH transport block bits and Maximum number of bits of a DL/UL-SCH transport block) assignable to a transport shared channel (DL-SCH and UL-SCH) used by a user device; and a channel setting unit (channel setting unit 140) that sets the transport shared channel based on the unit time interval determined by the transmission time interval determining unit.

A user device according to another aspect of the present invention is a user device (UE200) included in a radio communication system in which is used a plurality of transmission time intervals having different time lengths. The user device includes a transmission time interval acquiring unit (control information transmitter-receiver 220) that acquires, based on a least common multiple or a greatest common divisor of the plurality of transmission time intervals, a unit time interval in a time direction that defines a maximum bit number assignable to a transport shared channel used by the user device; and a channel setting unit (channel setting unit 230) that sets the transport shared channel based on a transmission time interval acquired by the transmission time interval acquiring unit.

A radio communication method according to still another aspect of the present invention is a radio communication method implemented in a radio communication system in which is used a plurality of transmission time intervals having different time lengths. The radio communication method includes determining, based on a least common multiple or a greatest common divisor of the plurality of transmission time intervals, a unit time interval in a time direction that defines a maximum bit number assignable to a transport shared channel used by a user device; and setting the transport shared channel based on the unit time interval determined at the determining.

### BRIEF DESCRIPTION OF DRAWINGS

FIG. 1 is an overall structural diagram of a radio communication system 10.
FIG. 2 shows a concept of a radio resource block RB used in the radio communication system 10.
FIG. 3 is an example of a configuration of TTI applied to a carrier used in the radio communication system 10.
FIG. 4 is a functional block diagram of eNB 100A.
FIG. 5 is a functional block diagram of UE 200.
FIG. 6 is a flowchart of an operation of determination of the TTI and setting of DL-SCH (Operation Example 1).
FIG. 7 is a flowchart of an operation of determination of the TTI and setting of the DL-SCH (Operation Example 2).
FIG. 8 is a flowchart of an operation of determination of the TTI and setting of the DL-SCH (Operation Example 3).
FIG. 9 is a flowchart of an operation of determination of the TTI and setting of the DL-SCH (Operation Example 4).
FIG. 10 is a view for explaining an operation of determining a maximum bit number assignable to the DL-SCH based on a time length of a round trip time (RTT) of a hybrid automatic repeat request (HARQ).
FIG. 11 is a view showing an example of hardware configuration of the eNB 100A and the UE 200.

### MODES FOR CARRYING OUT THE INVENTION

Exemplary embodiments of the present invention are explained below with reference to the accompanying drawings. In the drawings, structural elements having the same function or configuration are indicated by the same or similar reference numerals and the explanation thereof is appropriately omitted.

### (1) Overall Structural Configuration of Radio Communication System

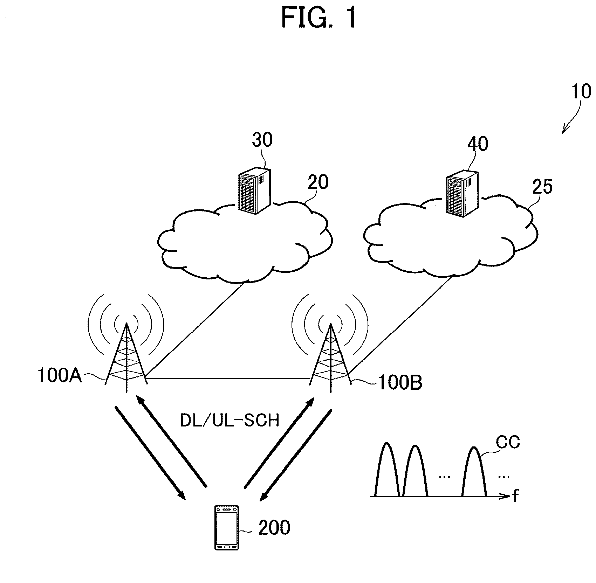

FIG. 1 is an overall structural diagram of a radio communication system 10 according to the present embodiment. The radio communication system 10 is a radio communication system that uses the Long Term Evolution (LTE) and the 5G New Radio (NR). Note that, the LTE can be called as 4G and the NR can be called as 5G.

The radio communication system 10 includes Evolved Packet Core 20 (hereinafter, "EPC 20") that is a core network of the LTE (E-UTRA), and NG Core 25 (hereinafter, "NGC 25") that is a core network of the NR. Note that, the NGC 25 can be called as 5GC.

The EPC 20 includes a node 30, which can be Mobility Management Entity (MME), Serving Gateway (SGW), and the like, and the NGC 25 also includes a node 40 (Access and Mobility Management Function (AMF), Session Management Function (SMF), and the like) having functions corresponding to the MME and the SGW; however, these are not shown in FIG. 1.

A radio base station 100A (hereinafter, "eNB 100A") is connected to the EPC 20. The eNB 100A is a radio base station of the LTE system. In the present embodiment, the eNB 100A can be referred to as MeNB. The eNB 100A belongs to a master cell group (MCG).

A radio base station 100B (hereinafter, "gNB 100B") is connected to the NGC 25. The gNB 100B is a radio base station of the NR system. In the present embodiment, the gNB 100B can be referred to as SgNB. The gNB 100B belongs to a secondary cell group (SCG).

In the present embodiment, the eNB 100A and the gNB 100B constitute a network device.

A user device (user equipment) 200 (hereinafter, "UE 200") performs radio communication with the eNB 100A and the gNB 100B. Specifically, the UE 200 performs radio communication with the eNB 100A using the LTE system, and with the gNB 100B using the NR system. Particularly, in the present embodiment, the UE 200 can execute carrier aggregation (CA) in which are used a plurality of component carriers CCs (hereinafter, a carrier includes an ordinary carrier and the CC), and dual connectivity (DC) in which the connection with the eNB 100A and the gNB 100B are performed simultaneously.

Moreover, the UE 200 configures a bearer, which is a logical communication path, with the EPC 20 or the NGC 25. Specifically, the eNB 100A configures an MCG bearer with the UE 200. Moreover, the eNB 100A and the gNB 100B configure a split bearer with the UE 200. Furthermore, the gNB 100B can configure an SCG bearer with the UE 200. The split bearer is a bearer that goes from the core network (EPC 20 or NGC 25) and splits to another radio base station via the eNB 100A or the gNB 100B.

Moreover, the UE 200 sets a transport shared channel and performs the radio communication with the eNB 100A or the gNB 100B. Specifically, the UE 200 sets DL-SCH that is a downlink transport shared channel and sets UL-SCH that is an uplink transport shared channel.

In the present embodiment, Short TTI, which is shorter than the Transmission Time Interval (TTI) of 1 ms, is introduced. That is, in the radio communication system 10, a plurality of transmission time intervals of the radio signals having different TTI lengths (time lengths) is used.

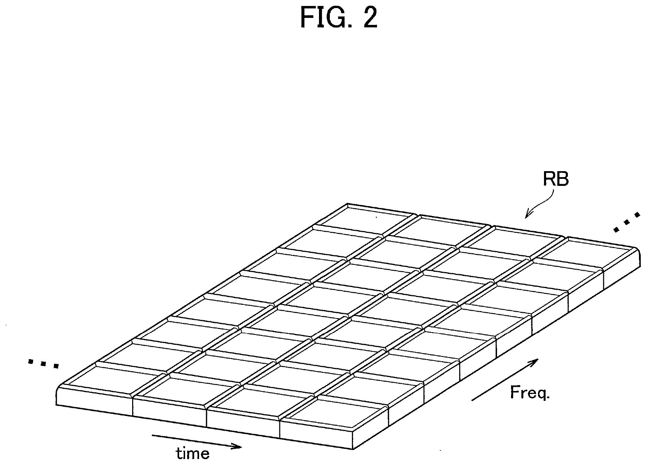

FIG. 2 shows a concept of a radio resource block RB used in the radio communication system 10. As shown in FIG. 2, the radio resource block RB is constituted by a resource in a frequency (Freq.) direction and a resource in a time (time) direction.

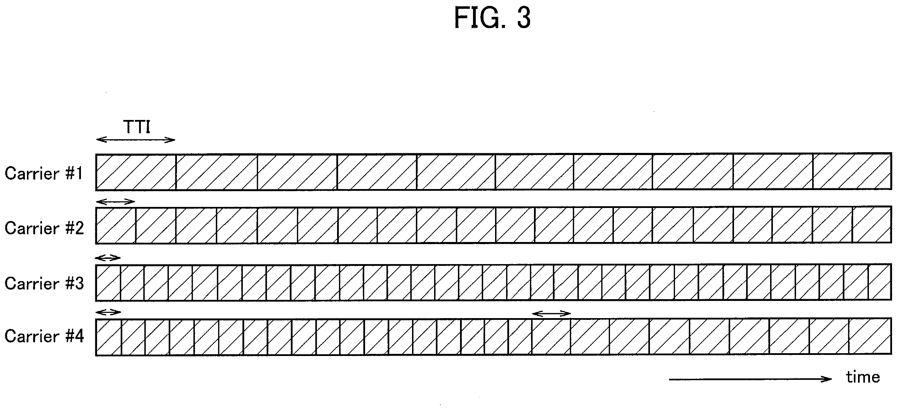

FIG. 3 is an example of a configuration of the TTI applied to a carrier used in the radio communication system 10. In the example shown in FIG. 3, four carriers are set, and the TTI of Carrier #1 is the longest (e.g., 1 ms). On the other hand, the TTIs of Carrier #2 to #4 are shorter than the TTI of Carrier #1, that is, the Short TTIs are used for Carrier #2 to #4.

Moreover, in Carrier #4, a plurality of TTI lengths is mixed. That is, in Carrier #4, subcarrier spacings (numerology) are different, and the TTI lengths are different in the same carrier.

### (2) Functional Block Configuration of Radio Communication System

A functional block configuration of the radio communication system 10 is explained below. Specifically, functional block configurations of the eNB 100A and the UE 200 are explained below.

### (2.1) eNB 100A

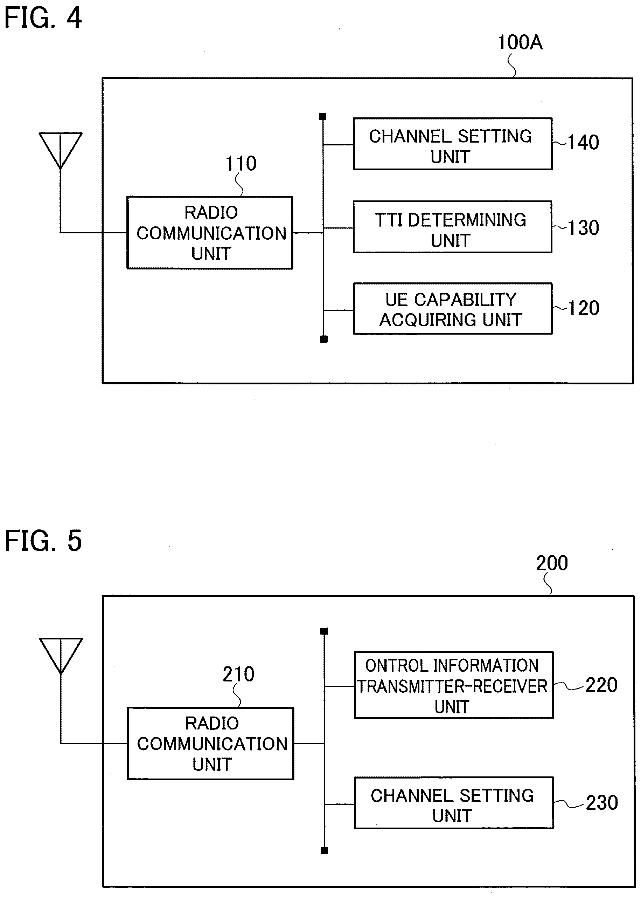

FIG. 4 is a functional block diagram of the eNB 100A. As shown in FIG. 4, the eNB 100A includes a radio communication unit 110, a UE capability acquiring unit 120, a TTI determining unit 130, and a channel setting unit 140. Except that the gNB 100B uses other radio communication system, the gNB 100B has substantially the same functional block configuration as the eNB 100A.

The radio communication unit 110 performs radio communication using the LTE system. Specifically, the radio communication unit 110 transmits to / receives from the UE 200 a radio signal using the LTE system. User data or control data is multiplexed in the radio signal. Moreover, the control data is transmitted / received therebetween by using a message of a radio resource control layer (RRC layer).

The UE capability acquiring unit 120 acquires capability information (UE Capability) of the UE 200. Specifically, the UE capability acquiring unit 120 transmits UE Capability Enquiry to the UE 200 to inquire a capability of the UE 200 and acquires from the UE 200 UE Capability Information including the capability information of the UE 200.

The UE Capability Information includes a category (UE Category) of the UE 200. Moreover, for each UE Category, the following parameters (hereinafter, "maximum bit number") are prescribed (see TS36.306 Table 4.1-1).

- Maximum number of DL-SCH transport block bits received within a TTI
- Maximum number of bits of a DL-SCH transport block received within a TTI
- Maximum number of UL-SCH transport block bits transmitted within a TTI
- Maximum number of bits of an UL-SCH transport block transmitted within a TTI

The TTI determining unit 130 determines the TTI to be used for the radio signal, i.e., a carrier, used for the radio communication with the UE 200. As mentioned earlier, the Short TTI has been introduced in the radio communication system 10. In the present embodiment, the TTI determining unit 130 constitutes a transmission time interval determining unit.

The TTI determining unit 130 determines, based on a least common multiple or a greatest common divisor of a plurality of TTIs, a unit time interval in the time direction that defines the above-mentioned maximum bit number that is assignable to the DL-SCH and the UL-SCH used by the UE 200. Note that, this unit time interval can be a predetermined TTI, specifically, the TTI prescribed in the LTE or the NR.

Alternatively, the TTI determining unit 130 can determine the unit time interval in the time direction that defines the maximum bit number based on the least common multiple or the greatest common divisor of a plurality of TTIs corresponding to the subcarrier spacings (numerology) applied to the carrier used for the radio communication with the UE 200.

Note that, the specific method used by the TTI determining unit 130 in determining the TTI will be explained below.

Moreover, the TTI determining unit 130 can determine the unit time interval in the time direction that defines the maximum bit number based on the TTI supported by the UE 200. That is, the TTI determining unit 130 can determine the TTI by considering the UE Category of the UE 200 acquired by the UE capability acquiring unit 120, or the TTI determining unit 130 can determine the TTI without considering the UE Category, by simply based on the least common multiple or the greatest common divisor of a plurality of TTIs.

Furthermore, the TTI determining unit 130 can determine the unit time interval in the time direction that defines the maximum bit number based on a predetermined TTI (predetermined transmission time interval) regardless of the fact that a plurality of TTIs is prescribed in the LTE (and NR) . For example, as explained below, the predetermined TTI can be 1 ms or 0.5 ms.

Alternatively, the TTI determining unit 130 can determine the unit time interval in the time direction that defines the maximum bit number based on a predetermined subframe number regardless of the fact that a plurality of TTIs is prescribed in the LTE (and NR). The predetermined subframe number, for example, as explained below, can be 1 subframe.

The TTI determining unit 130 can determine the TTI corresponding to the maximum bit number based on a round trip time (RTT) applied to a hybrid automatic repeat request (HARQ) executed with the UE 200.

The channel setting unit 140 sets various channels used for communication with the UE 200. Particularly, in the present embodiment, the channel setting unit 140 sets the transport shared channels (DL-SCH and UL-SCH).

Specifically, the channel setting unit 140 sets the transport shared channels based on the unit time interval determined by the TTI determining unit 130. More specifically, the channel setting unit 140 determines the maximum bit number assignable to the DL-SCH and the UL-SCH based on the determined TTI. The channel setting unit 140 selects the radio resource block RB to be used for the DL-SCH and the UL-SCH based on the maximum bit number.

### (2.2) UE 200

FIG. 5 is a functional block diagram of the UE 200. As shown in FIG. 5, the UE 200 includes a radio communication unit 210, a control information transmitter-receiver 220, and a channel setting unit 230.

The radio communication unit 210 performs radio communication using the LTE system and the NR system. Specifically, the radio communication unit 210 transmits to / receives from the eNB 100A a radio signal using the LTE system. Moreover, the radio communication unit 210 transmits to / receives from the gNB 100B a radio signal using the NR system. The message of the RRC layer, the user data, and the like are multiplexed in the radio signal.

The control information transmitter-receiver 220 receives various control information (e.g., message of the RRC layer) transmitted by the eNB 100A or the gNB 100B.

Particularly, in the present embodiment, the control information transmitter-receiver 220 refers to the received control information and acquires the unit time interval in the time direction that defines the maximum bit number assignable to the transport shared channels (DL-SCH and UL-SCH) used by the UE 200 based on the least common multiple or the greatest common divisor of a plurality of TTIs. In the present embodiment, the control information transmitter-receiver 220 constitutes a transmission time interval acquiring unit. Note that, the control information transmitter-receiver 220 can acquire information indicating the unit time interval via a medium access control layer (MAC layer) or via PDCCH (Physical Downlink Control Channel).

The channel setting unit 230 sets various channels used for communication with the eNB 100A (or gNB 100B). Particularly, in the present embodiment, the channel setting unit 230 sets the transport shared channels (DL-SCH and UL-SCH) .

Specifically, the channel setting unit 230 sets the transport shared channels based on the unit time interval acquired by the control information transmitter-receiver 220.

### (2.3) Method of Determining TTI

A method used by the eNB 100A (TTI determining unit 130) in determining the TTI will be explained below.

### (2.3.1) Determination Method 1

In Determination Method 1, the maximum bit number (see above) in the UE Category of the UE 200 is set to, regardless of whether supported by the UE 200, the least common multiple (or greatest common divisor) of the TTI length prescribed in the specification of the LTE.

In the case of the NR, the maximum bit number in the UE Category of the UE 200 is set to, regardless of whether supported by the UE 200, the least common multiple (or greatest common divisor) of all the TTI lengths corresponding in the subcarrier spacing (numerology) that becomes the reference and prescribed in the specification of the NR.

In the case of the dual connectivity (DC), in which both the LTE and the NR are used, the maximum bit number in the UE Category of the UE 200 is set to, regardless of whether supported by the UE 200, the TTI length prescribed in the specification of the LTE and the least common multiple (or greatest common divisor) of all the TTI lengths corresponding in a numerology that becomes the reference and prescribed in the specification of the NR.

### (2.3.2) Determination Method 2

In Determination Method 2, the maximum bit number (see above) in the UE Category of the UE 200 is set to, the TTI supported by the UE 200 and prescribed in the specification of the LTE, specifically, to the least common multiple (or greatest common divisor) of the TTI length that is the time length of such TTI.

In the case of the NR, the maximum bit number (see above) in the UE Category of the UE 200 is set to the least common multiple (or greatest common divisor) of all the TTI lengths corresponding in the subcarrier spacing (numerology) that becomes the reference and prescribed in the specification of the NR and supported by the UE 200.

In the case of the dual connectivity (DC) in which both the LTE and the NR are used, the maximum bit number in the UE Category of the UE 200 is set to the TTI length prescribed in the specification of the LTE and supported by the UE 200 and the least common multiple (or greatest common divisor) of all the TTI lengths corresponding in the numerology that becomes the reference and prescribed in the specification of the NR and supported by the UE 200.

### (2.3.3) Determination Method 3

In Determination Method 3, the conventional TTI length (1 ms) is considered. That is, considering that the conventional TTI length is 1 ms, the least common multiple of this TTI length will be substantially 1 ms.

Therefore, the maximum bit number (see above) in the UE Category of the UE 200 is set to, regardless of whether it supports the TTI length of the Short TTI shorter than 1 ms, a value within 1 ms (bit number assignable within 1 ms). For example, if the UE Category is "1", the Maximum number of DL-SCH transport block bits received within a TTI is set to "10296" bits.

Alternatively, because 1 ms = 1 subframe, the maximum bit number can be set to a value within 1 subframe.

In the case of the NR, because a maximum value of a slot length in a reference numerology (15 KHz sub-carrier spacing) of the NR is 1 ms, the least common multiple of the TTI length will be substantially 1 ms.

Accordingly, the maximum bit number in the UE Category of the UE 200 is set to, regardless of whether it supports the TTI length of the Short TTI shorter than 1 ms, a value within 1 ms (bit number assignable within 1 ms). However, there are situations where the maximum value of the slot length is 0.5 ms.

In the case of the dual connectivity (DC), in which both the LTE and the NR are used, because the least common multiple of the TTI length and the slot length prescribed in the LTE and the reference numerology (15 KHz sub-carrier spacing) of the NR is 1 ms, the maximum bit number in the UE Category of the UE 200 is set to, regardless of whether it supports the TTI length of the Short TTI shorter than 1 ms, a value within 1 ms (bit number assignable within 1 ms).

### (2.3.4) Defining Scheduling and TBS According to TTI Length

Transport Block Size (TBS) scheduled for the UE 200 is determined according to the TTI length determined by using the above-mentioned Determination Methods.

The above-mentioned maximum bit number is calculated by using the least common multiple of a plurality of TTI lengths as follows.

### - TBS [bit number] x determined TTI length / Least common multiple of TTI length

Moreover, when using the greatest common divisor of a plurality of TTI lengths, the maximum bit number is calculated as follows.

### - TBS [bit number] x determined TTI length x Greatest common divisor of TTI length

Moreover, when a value of the TBS or TB bit number of DL-SCH/UL-SCH is prescribed as being handleable per 1 ms, the maximum bit number is calculated as follows.

### - (TBS [bit number/ms]) x determined TTI length)/1 ms

Furthermore, the TBS of the NR is set to a size that is transmittable and receivable in a maximum slot length (1ms or 0.5 ms) of the reference numerology (15 KHz sub-carrier spacing) . When the UE 200 uses the TTI length shorter than 1 ms (or 0.5 ms), the maximum bit number is calculated as follows.

### - TBS [bit number/1 ms (or 0.5 ms)] x determined TTI length

Note that if, for example, the above-mentioned TBS means, when it is the LTE, a value of a TBS table prescribed in TS 36.213.

### (2.3.5) Handling of Hybrid .Automatic Repeat Request (HARQ)

The hybrid automatic repeat request (HARQ) is prescribed in the LTE and the NR. When the HARQ is applied to the PDSCH (Physical Downlink Shared Channel), and if there exists mixed data transmission with varying TTI lengths, the UE 200 may perform PDSCH data transmission with varying TTI lengths and processing until feedback (HARQ ACK) of the HARQ in parallel.

In this case, the TTI length determined by using the above-mentioned Determination Methods can be replaced with the longest time length among a plurality of round trip times (RTT) from the data transmission to the HARQ ACK. That is, the above-mentioned maximum bit number can be determined based on the maximum value of the RTTs.

Specifically, the maximum bit number can be set to, regardless of whether supported by the UE 200, a maximum value of HARQ RTT lengths corresponding in the subcarrier spacing (numerology) that becomes the reference and prescribed in the specification of the NR.

Moreover, the maximum bit number can be set to a maximum HARQ RTT length among all the numerology prescribed in the specification of the LTE or the NR. Furthermore, the maximum bit number can be set to the maximum value of the HARQ RTT lengths supported by the UE 200.

Alternatively, the maximum bit number can be set to, in "during maximum HARQ RTT length x maximum HARQ process number", a maximum bit number transmittable and receivable by the UE 200 (that is, Maximum number of DL/UL-SCH transport block bits, Maximum number of bits of a DL/UL-SCH transport block).

### (3) Operation of Radio Communication System

An operation of the radio communication system 10 is explained below. Specifically, an operation of determination of the TTI and setting of the transport shared channels (DL-SCH and UL-SCH) by the eNB 100A is explained.

Note that, the operation by the eNB 100A is explained here as an example and similar operation can be performed by the gNB 100B. Furthermore, the UE 200 similarly sets the transport shared channels (DL-SCH and UL-SCH) based on the TTI specified by the eNB 100A (or EPC 20).

### (3.1) Operation Example 1

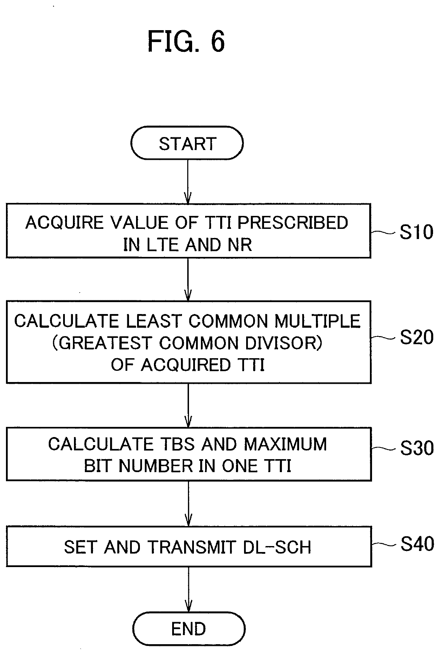

FIG. 6 is a flowchart of an operation of determination of the TTI and setting of the DL-SCH (Operation Example 1). As shown in FIG. 6, the eNB 100A acquires values (TTI lengths) of a plurality of TTIs prescribed in the LTE and the NR (Step S10) . Note that, as mentioned earlier, the eNB 100A can acquire the TTI length prescribed in only one of the LTE and the NR. Moreover, a method of acquiring the TTI length is not particularly limited. The eNB 100A may maintain the TTI length inside thereof or may acquire the TTI length by sending an inquiry to the EPC 20 or the NGC 25.

The eNB 100A calculates the least common multiple (or greatest common divisor) of the acquired plurality of TTIs (TTI lengths) (Step S20). For example, if the TTIs acquired are 0.5 ms and 1 ms, the eNB 100A calculates the least common multiple as 1.0 ms.

The eNB 100A calculates the TBS (Transport Block Size) and the maximum bit number (Maximum number of DL/UL-SCH transport block bits, Maximum number of bits of a DL/UL-SCH transport block) in one TTI in the TTI length by using the calculated least common multiple of the TTI length (Step S30) .

Furthermore, the eNB 100A selects the radio resource block RB to be used for the DL-SCH (and UL-SCH) based on the calculated maximum bit number, and sets the DL-SCH (Step S40). The eNB 100A transmits the set DL-SCH to the UE 200.

### (3.2) Operation Example 2

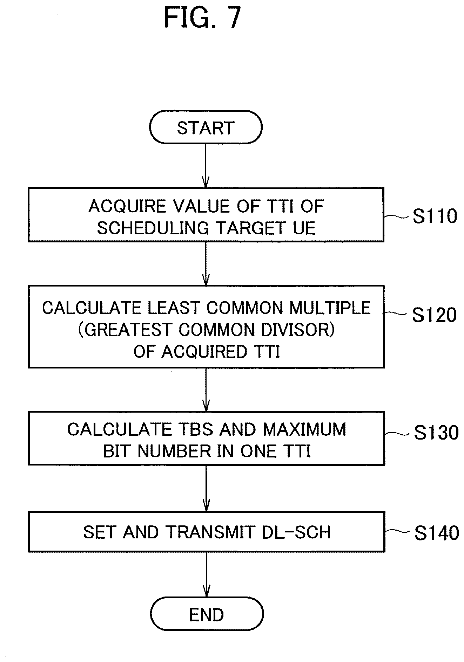

FIG. 7 is a flowchart of an operation of determination of the TTI and setting of the DL-SCH (Operation Example 2). The different portions with respect to Operation Example 1 will be mainly explained here. As shown in FIG. 7, the eNB 100A acquires values of the TTIs corresponding to the scheduling target UE 200 (Step S110).

The processing at Steps S120 to S140 is similar to that performed at Steps S20 to S40 in Operation Example 1. The difference is that the target TTIs are the TTIs acquired at Step S110.

### (3.3) Operation Example 3

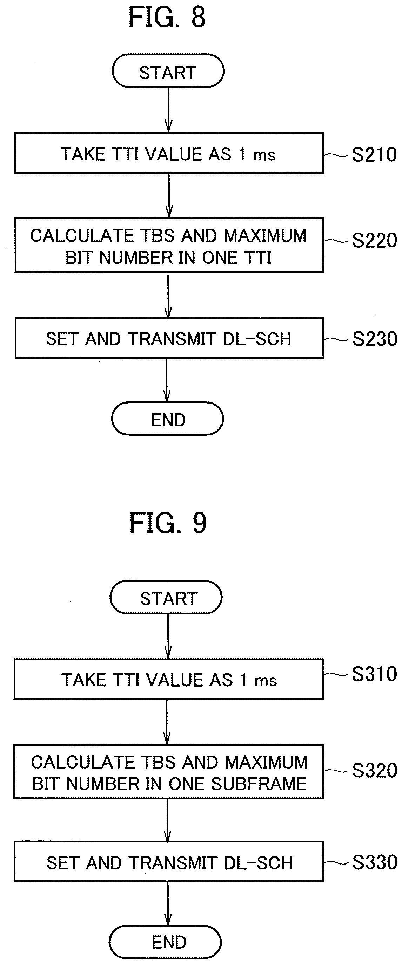

FIG. 8 is a flowchart of an operation of determination of the TTI and setting of the DL-SCH (Operation Example 3). The different portions with respect to Operation Example 1 will be mainly explained here. As shown in FIG. 8, although a plurality of TTIs is prescribed, the eNB 100A decides to apply the conventional TTI of 1 ms (Step S210). Therefore, the TTI of 1 ms is applied even when the plurality of TTIs is prescribed.

The processing at Steps S220 and S230 is similar to that performed at Steps S20 and S30 in Operation Example 1.

### (3.4) Operation Example 4

FIG. 9 is a flowchart of an operation of determination of the TTI and setting of the DL-SCH (Operation Example 4). Even in Operation Example 4, the eNB 100A decides to apply the TTI of 1 ms like in Operation Example 3 (Step S310).

In this example, the eNB 100A calculates the TBS (Transport Block Size) and the maximum bit number (Maximum number of DL/UL-SCH transport block bits, Maximum number of bits of a DL/UL-SCH transport block) in 1 subframe instead of in one TTI (Step S320).

The processing at Step S330 is similar to that performed at Step S40 in Operation Example 1.

### (3.5) Operation Example 5

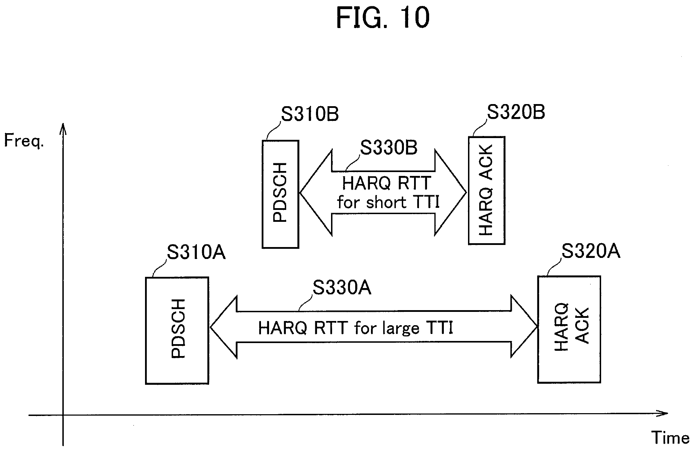

FIG. 10 is a view for explaining an operation of determining the maximum bit number assignable to the DL-SCH based on the time length of the round trip time (RTT) of the hybrid automatic repeat request (HARQ).

As mentioned earlier, the radio communication system 10 performs the PDSCH data transmission with varying TTI lengths and the processing until the feedback (HARQ ACK) of the HARQ in parallel.

Specifically, as shown in FIG. 10, data transmission of PDSCH 310A and returning of HARQ ACK 320A, and data transmission of PDSCH 310B and returning of HARQ ACK 320B are performed in parallel on the time axis.

In this case, HARQ RTT 330A applied to the PDSCH 310A supports a long TTI (e.g., 1 ms). On the other hand, HARQ RTT 330B applied to the PDSCH 310B supports a TTI (Short TTI) shorter than that supported by the HARQ RTT 330A.

In such a case, the eNB 100A can determine the above-mentioned maximum bit number based on the maximum HARQ RTT length, that is, the HARQ RTT 330A in the example shown in FIG. 10.

### (4) Effects and advantages

According to the present embodiment, the following effects and advantages can be obtained. Specifically, the eNB 100A determines the above-mentioned maximum bit number assignable to the DL-SCH and UL-SCH that are used by the UE 200 based on the least common multiple or the greatest common divisor of a plurality of TTIs.

Therefore, even when a plurality of TTI lengths including the Short TTI is used, it is possible to easily set an appropriate parameter (maximum bit number) of the DL-SCH and the UL-SCH. That is, when the TTIs (TTI lengths) of the LTE and the NR, or the TTIs applied to the component carrier CC used in the dual connectivity (DC) with the LTE and the NR, are different, the eNB 100A can determine a universal and original TTI with respect to a plurality of UEs 200 without depending on those plurality of TTIs. Moreover, the eNB 100A can uniquely prescribe the TBS size without depending on the TTI length supported by the UE 200.

In the present embodiment, the TTI corresponding to the maximum bit number can be determined based on the least common multiple or the greatest common divisor of the plurality of TTIs corresponding in the subcarrier spacing (numerology). Therefore, an appropriate TTI can be selected when several kinds of subcarrier spacings are applied.

In the present embodiment, the TTI corresponding to the maximum bit number can be determined based on the TTI supported by the UE 200. Therefore, the TTI depending on an actual supporting state of the UE 200 can be determined.

In the present embodiment, the conventional TTI (predetermined transmission time interval) of 1 ms can be used even if the plurality of TTIs is prescribed. Alternatively, 1 subframe (predetermined subframe number) can be used even if the plurality of TTIs is prescribed. Therefore, by setting the TTI which is more likely to be applied in reality, the substantially universal TTI can be determined easily with respect to the plurality of UEs 200.

In the present embodiment, among the PDSCH data transmission and the processing until the feedback (HARQ ACK) of the HARQ, the TTI corresponding to the maximum bit number can be determined based on the maximum HARQ RTT length. Therefore, the universal TTI can be determined even when a plurality of HARQ processes is performed in parallel.

### (5) Other Embodiments

Although the contents of the present invention have been explained above by using the embodiments, it is obvious for a person skilled in the art that the present invention is not limited to those embodiments and that various modifications and improvements thereof are possible.

For example, in the embodiments explained above, the eNB 100A includes the TTI determining unit 130 and determines the TTI. However, this function can be performed by another network device, for example, the node 30 or the node 40.

Furthermore, the block diagrams used for explaining the embodiments (FIGS. 4 and 5) show functional blocks. Those functional blocks (structural components) can be realized by a desired combination of hardware and / or software. Means for realizing each functional block is not particularly limited. That is, each functional block may be realized by one device combined physically and / or logically. Alternatively, two or more devices separated physically and / or logically may be directly and / or indirectly connected (for example, wired and / or wireless) to each other, and each functional block may be realized by these plural devices.

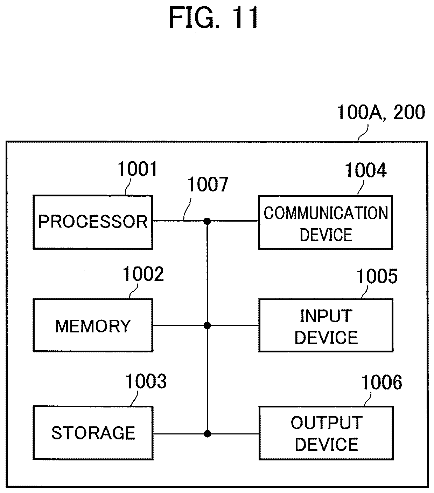

Furthermore, the eNB 100A, and the UE 200 (devices) explained above can function as a computer that performs the processing of the present invention. FIG. 11 is a diagram showing an example of a hardware configuration of the devices. As shown in FIG. 11, each of the devices can be configured as a computer device including a processor 1001, a memory 1002, a storage 1003, a communication device 1004, an input device 1005, an output device 1006, and a bus 1007.

The functional blocks of the devices (see FIGS. 4 and 5) can be realized by any of hardware elements of the computer device or a desired combination of the hardware elements.

The processor 1001, for example, operates an operating system to control the entire computer. The processor 1001 can be configured with a central processing unit (CPU) including an interface with a peripheral device, a control device, a computing device, a register, and the like.

The memory 1002 is a computer readable recording medium and is configured, for example, with at least one of ROM (Read Only Memory), EPROM (Erasable Programmable ROM), EEPROM (Electrically Erasable Programmable ROM), RAM (Random Access Memory), and the like. The memory 1002 can be called register, cache, main memory (main memory), and the like. The memory 1002 can store therein a computer program (computer program codes), software modules, and the like that can execute the method according to the above embodiments.

The storage 1003 is a computer readable recording medium. Examples of the storage 1003 include an optical disk such as CD-ROM (Compact Disc ROM), a hard disk drive, a flexible disk, a magneto-optical disk (for example, a compact disk, a digital versatile disk, a Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission / reception device) capable of performing communication between computers via a wired and / or wireless network. The communication device 1004 is also called, for example, a network device, a network controller, a network card, a communication module, and the like.

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

In addition, the manner of notification of information is not limited to the one explained in the embodiments, and the notification may be performed in other manner. For example, the notification of information can be performed by physical layer signaling (for example, DCI (Downlink Control Information), UCI (Uplink Control Information)), upper layer signaling (for example, RRC signaling, MAC (Medium Access Control) signaling, notification information (MIB (Master Information Block), SIB (System Information Block)), other signals, or a combination thereof. In addition, the RRC signaling can be called an RRC message, and the RRC signaling can be, for example, an RRC Connection Setup message, an RRC Connection Reconfiguration message, and the like.

Furthermore, the input / output information can be stored in a specific location (for example, a memory) or can be managed in a management table. The information to be input / output can be overwritten, updated, or added. The information can be deleted after outputting. The inputted information can be transmitted to another device.

The order of the sequences, flowcharts, and the like in the embodiments can be rearranged unless there is a contradiction.

Moreover, in the embodiments explained above, the specific operations performed by the eNB 100A (gNB100B, hereinafter the same) can be performed by another network node (device) . Moreover, functions of the eNB 100A can be provided by combining a plurality of other network nodes.

Moreover, the terms used in this specification and / or the terms necessary for understanding the present specification can be replaced with terms having the same or similar meanings. For example, a channel and / or a symbol can be replaced with a signal (signal) if that is stated. Also, the signal can be replaced with a message. Moreover, the terms "system" and "network" can be used interchangeably.

Furthermore, the used parameter and the like can be represented by an absolute value, can be expressed as a relative value from a predetermined value, or can be represented by corresponding other information. For example, the radio resource can be indicated by an index.

The eNB 100A (base station) can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use RRH: Remote Radio Head).

The term "cell" or "sector" refers to a part or all of the coverage area of a base station and / or a base station subsystem that performs communication service in this coverage. In addition, the terms "base station" "eNB", "cell", and "sector" can be used interchangeably in the present specification. The base station can also be referred to as a fixed station, Node B, eNode B (eNB), gNode B (gNB), an access point, a femtocell, a small cell, and the like.

The UE 200 is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

As used herein, the phrase "based on" does not mean "based only on" unless explicitly stated otherwise. In other words, the phrase "based on" means both "based only on" and "based at least on".

Furthermore, the terms "including", "comprising", and variants thereof are intended to be inclusive in a manner similar to "having". Furthermore, the term "or" used in the specification or claims is intended not to be an exclusive disjunction.

Any reference to an element using a designation such as "first", "second", and the like used in the present specification generally does not limit the amount or order of those elements. Such designations can be used in the present specification as a convenient way to distinguish between two or more elements. Thus, the reference to the first and second elements does not imply that only two elements can be adopted, or that the first element must precede the second element in some or the other manner.

Throughout the present specification, for example, during translation, if articles such as a, an, and the in English are added, these articles shall include plurality, unless it is clearly indicated that it is not so according to the context.

As described above, the details of the present invention have been disclosed by using the embodiments of the present invention. However, the description and drawings which constitute part of this disclosure should not be interpreted so as to limit the present invention. From this disclosure, various alternative embodiments, examples, and operation techniques will be apparent to a person skilled in the art.

### INDUSTRIAL APPLICABILITY

The network device, the user device, and the radio communication method according to the above-mentioned embodiments are useful in that it is possible to easily set an appropriate parameter (maximum bit number) of the transport shared channel even when a plurality of TTI lengths including the Short TTI is used.

### EXPLANATION OF REFERENCE NUMERALS

- 10: radio communication system
- 20: EPC
- 25: NGC
- 100A: eNB
- 100B: gNB
- 110: radio communication unit
- 120: UE capability acquiring unit
- 130: TTI determining unit
- 140: channel setting unit
- 200: UE
- 210: radio communication unit
- 220: control information transmitter-receiver
- 230: channel setting unit
- 1001: processor
- 1002: memory
- 1003: storage
- 1004: communication device
- 1005: input device
- 1006: output device
- 1007: bus

## Claims

1. A network device included in a radio communication system in which is used a plurality of transmission time intervals having different time lengths, comprising:
a transmission time interval determining unit that determines, based on a least common multiple or a greatest common divisor of the plurality of transmission time intervals, a unit time interval in a time direction that defines a maximum bit number assignable to a transport shared channel used by a user device; and
a channel setting unit that sets the transport shared channel based on the unit time interval determined by the transmission time interval determining unit.

2. The network device as claimed in claim 1, wherein,
the transmission time interval determining unit determines the unit time interval in the time direction that defines the maximum bit number based on a least common multiple or a greatest common divisor of a plurality of transmission time intervals corresponding in subcarrier spacing that is applied to a carrier used in radio communication with the user device.

3. The network device as claimed in claim 1, wherein,
the transmission time interval determining unit determines the unit time interval in the time direction that defines the maximum bit number based on a transmission time interval supported by the user device.

4. The network device as claimed in claim 1, wherein,
the transmission time interval determining unit determines the unit time interval in the time direction that defines the maximum bit number, regardless of the plurality of transmission time intervals, based on a predetermined transmission time interval.

5. The network device as claimed in claim 1, wherein,
the transmission time interval determining unit determines the unit time interval in the time direction that defines the maximum bit number, regardless of the plurality of transmission time intervals, based on a predetermined subframe number.

6. The network device as claimed in claim 1, wherein,
the transmission time interval determining unit determines the unit time interval in the time direction corresponding to the maximum bit number based on a round trip time that is applied to a hybrid automatic repeat request executed with the user device.

7. A user device included in a radio communication system in which is used a plurality of transmission time intervals having different time lengths, comprising:
a transmission time interval acquiring unit that acquires, based on a least common multiple or a greatest common divisor of the plurality of transmission time intervals, a unit time interval in a time direction that defines a maximum bit number assignable to a transport shared channel used by the user device; and
a channel setting unit that sets the transport shared channel based on the unit time interval acquired by the transmission time interval acquiring unit.

8. A radio communication method implemented in a radio communication system in which is used a plurality of transmission time intervals having different time lengths, comprising:
determining, based on a least common multiple or a greatest common divisor of the plurality of transmission time intervals, a unit time interval in a time direction that defines a maximum bit number assignable to a transport shared channel used by a user device; and
setting the transport shared channel based on the unit time interval determined at the determining.
